# EUROPEAN PATENT APPLICATION

(11) **EP 3 016 399 A2**
(43) Date of publication of application: **04.05.2016**
(21) Application number: 15190033.9
(22) Date of filing: 15.10.2015
(51) Int. Cl.: H04N 21/422

(54) **DISPLAY APPARATUS, REMOTE CONTROL APPARATUS, REMOTE CONTROL SYSTEM AND CONTROLLING METHOD THEREOF**

(30) Priority: 31.10.2014 KR 20140150013
(71) Applicant: Samsung Electronics Co., Ltd., Gyeonggi-do 16677 (KR)
(72) Inventor: AHN, Joon-young, Gyeonggi-do (KR)
(74) Representative: Hewett, Jonathan Michael Richard

(57) **Abstract**

A display apparatus which is controlled by a remote control apparatus is provided. The display apparatus includes an output unit including a display and a speaker, a communicator configured to perform communication with the remote control apparatus while the display apparatus is turned off, and a processor configured to be turned on according to a predetermined signal received from the remote control apparatus while the display apparatus is turned off, and control an operation of the output unit based on at least one of channel selection information and volume control information included in the predetermined signal.

## Description

The present invention relates to a display apparatus, a remote control apparatus, a remote control system, and a controlling method thereof, and more particularly, to a display apparatus capable of performing a remote control, a remote control apparatus, a remote control system, and a controlling method thereof.

Generally, a display apparatus such as a digital TV provides a remote control apparatus for controlling an operation of the corresponding display apparatus remotely for the sake of user convenience. Such a remote control apparatus is generally referred to as a remote controller, and a user may select a desirable broadcast channel using the remote controller and accordingly, the display apparatus may display a broadcast selected by the user from among broadcast signals transmitted from a broadcasting station. In addition, the user may control volume of the broadcast which he or she is currently watching using the remote controller.

However, in the related art display apparatus, manipulations of the remote controller to, for example, select channels or control volume can be performed only when the power of the display apparatus is turned on. Therefore, if the power of a display apparatus is turned off, the power of the display apparatus should be turned on first and then, the manipulations of selecting channels or controlling volume can be performed through the remote controller. In this case, the channel or volume just before the power of the display apparatus was turned off is output when the display apparatus is turned on again and thus, the user may experience inconvenience with undesired channel and volume.

An aspect of the exemplary embodiments of the present invention relates to a display apparatus which may select channel or control volume in advance while the display apparatus is turned off, a remote control apparatus, a remote control system, and a controlling method thereof.

According to an exemplary embodiment, there is provided a display apparatus which is controlled by a remote control apparatus, including an output unit including a display and a speaker, a communicator configured to perform communication with the remote control apparatus while the display apparatus is turned off, and a processor configured to be turned on according to a predetermined signal received from the remote control apparatus while the display apparatus is turned off, and control an operation of the output unit based on at least one of channel selection information and volume control information included in the predetermined signal.

The predetermined signal may be a signal according to a Radio Frequency (RF) method.

The processor may be turned on according to a wake signal received from the remote control apparatus while the display apparatus is turned off to activate the display apparatus excluding the output unit, and in response to receiving the predetermined signal, activate the output unit.

The processor, in response to receiving a signal for turning off the display apparatus, may control to transmit at least one of channel information and volume information of a content which is output through the output unit at a time when the signal is received, to the remote control apparatus.

The predetermined signal may further include information regarding at least one of an external input mode and an application program selected by the remote control apparatus.

According to an exemplary embodiment, there is provided a controlling method of a display apparatus including receiving a predetermined signal from a remote control apparatus while the display apparatus is turned off and turning on the display apparatus according to the received predetermined signal, and controlling an operation of the output unit which includes a display and a speaker based on at least one of channel selection information and volume control information included in the predetermined signal.

The predetermined signal may be a signal according to a Radio Frequency (RF) method.

The controlling may include activating the display apparatus excluding the output unit according to a wake signal received from the remote control apparatus while the display apparatus is turned off, and in response to receiving the predetermined signal, activating the output unit to turn on the display apparatus.

The method may further include, in response to receiving a signal for turning off the display apparatus, transmitting at least one of channel information and volume information of a content which is output through the output unit at a time when the signal is received, to the remote control apparatus.

The predetermined signal may further include information regarding at least one of an external input mode and an application program selected by the remote control apparatus.

According to an exemplary embodiment, there is provided a remote control apparatus to control a display apparatus, including a user interface configured to receive a user command, a communicator configured to perform communication with at least one of an external server and a display apparatus, a display configured to display a User Interface (UI) screen for providing information regarding a content received from the external server in real time, and a processor configured to transmit a predetermined signal which includes at least one of channel selection information and volume control information according to a user command input on the UI screen and turns on the display apparatus, to the display apparatus.

The predetermined signal may be a signal according to a Radio Frequency (RF) method.

The processor, in response to a predetermined event occurring, may activate the display apparatus excluding the output unit by transmitting a wake signal to the display apparatus, and turn on the display apparatus by transmitting the predetermined signal to the display apparatus to activate the output unit.

The apparatus may further include a storage configured to store channel and volume information which is received as the display apparatus is turned off, and the processor may control to display the UI screen based on information stored in the storage.

The processor may control to further include at least one of external input mode selection information and application program selection information according to the user command in the predetermined signal and transmit the predetermined signal.

According to an exemplary embodiment, there is provided a controlling method of a remote control apparatus, including displaying a UI screen for providing information regarding a content received from an external server in real time and transmitting a predetermined signal which includes at least one of channel selection information and volume control information according to a user command input on the UI screen and turns on an external display apparatus, to the display apparatus.

The predetermined signal may be a signal according to a Radio Frequency (RF) method.

The transmitting may include, in response to a predetermined event occurring, activating the display apparatus excluding the output unit by transmitting a wake signal to the display apparatus, and turning on the display apparatus by transmitting the predetermined signal to the remote control apparatus to activate the output unit.

The displaying a UI screen may include displaying the UI screen based on information on channel and volume which relates to a content right before the external display apparatus was turned off and is stored as the external display apparatus was turned off.

According to an exemplary embodiment, there is provided a remote control system including a display apparatus and a remote control apparatus, including a remote control apparatus configured to display a UI screen for providing information regarding a content received from an external server in real time, and transmit a predetermined signal including at least one of channel selection information and volume control information according to a user command which is input on the UI screen to the display apparatus and a display apparatus configured to be turned on according to a predetermined signal received from the remote control apparatus while the display apparatus is turned off, and control an operation of an output unit including a display and a speaker based on at least one of channel selection information and volume control information included in the predetermined signal.

According to the above-described various exemplary embodiments, a user may select a channel and control volume even before turning on a display apparatus and thus, standby power of the display apparatus may be reduced and at the same time, user convenience can be improved.

The above and/or other aspects of the present invention will be more apparent by describing certain exemplary embodiments of the present invention with reference to the accompanying drawings, in which:
FIG. 1 is a view illustrating a remote control system according to an exemplary embodiment;
FIG. 2 is a block diagram illustrating configuration of a display apparatus briefly according to an exemplary embodiment;
FIG. 3 is a block diagram illustrating configuration of a remote control apparatus briefly according to an exemplary embodiment;
FIG. 4 is a block diagram illustrating configuration of a display apparatus in detail according to another exemplary embodiment;
FIG. 5 is a block diagram illustrating configuration of a storage in detail according to an exemplary embodiment;
FIG. 6 is a view to explain a UI screen provided by a remote control apparatus according to an exemplary embodiment;
FIG. 7 is a flowchart to explain a controlling method of a display apparatus according to an exemplary embodiment;
FIG. 8 is a flowchart to explain a controlling method of a remote control apparatus according to an exemplary embodiment; and
FIG. 9 is a view to explain a controlling process of a remote control system according to another exemplary embodiment.

The exemplary embodiments of the present invention may be diversely modified. Accordingly, specific exemplary embodiments are illustrated in the drawings and are described in detail in the detailed description. However, it is to be understood that the present invention is not limited to a specific exemplary embodiment, but includes all modifications, equivalents, and substitutions without departing from the scope of the present invention. Also, well-known functions or constructions are not described in detail since they would obscure the disclosure with unnecessary detail.

Hereinafter, exemplary embodiments will be described in greater detail with reference to the accompanying drawings.

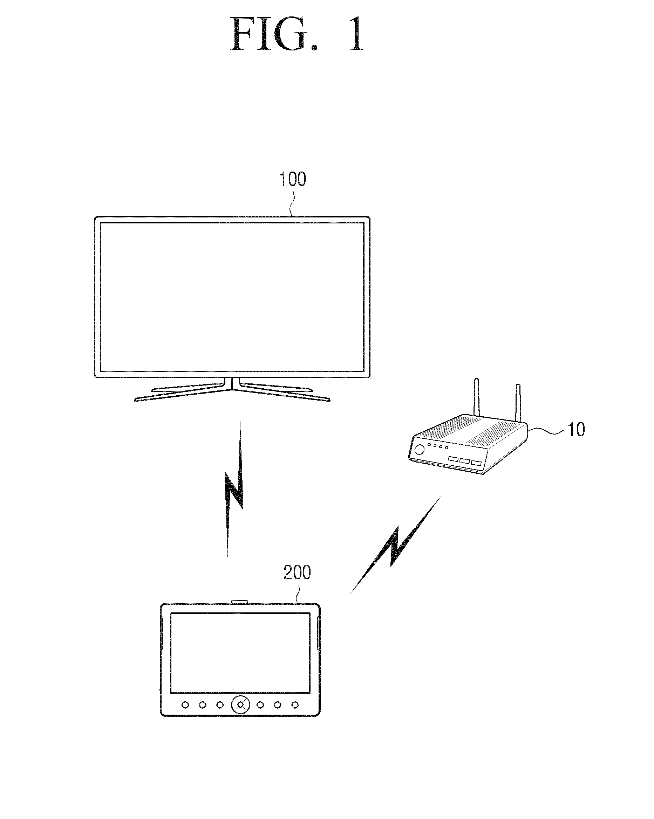

FIG. 1 is a view illustrating a remote control system according to an exemplary embodiment.

Referring to FIG. 1, the remote control system according to an exemplary embodiment includes the display apparatus 100 and the remote control apparatus 200.

The display apparatus 100 displays a content received through an image signal such as a TV signal. The display apparatus 100 may provide a user with various visual and auditory contents by outputting images and sounds to outside simultaneously.

The display apparatus 100 may include an infrared ray receiving means for receiving infrared rays irradiated from the remote control apparatus 200 through an Infrared Ray (IR) communication method to receive a certain control from the remote control apparatus 200 or a transmitting means for receiving transmission of a certain control command through a Radio Frequency (RF) communication method from the remote control apparatus 200 such as an RF communication module.

The display apparatus 100 may be various types of display apparatuses which can be controlled by the remote control apparatus 200. For example, the display apparatus 100 may be any apparatus which may display an image through a screen of a TV including a smart TV, computer, etc.

Recently, various terminal apparatuses capable of a wireless communication function such as a smart phone may be used as the remote control apparatus 200. In this case, the display apparatus 100 and the remote control apparatus 200 may include a wireless communication module which may transmit/receive electric signals reciprocally through a wireless communication network which uses various mobile communication standards such as Bluetooth, Wi-Fi, 3GPP, 3GPPS, etc. In this case, the remote control apparatus 200 such as a smart phone generates a predetermined signal according to a user's touch manipulation, etc. and transmits the signal to the display apparatus 100, and the display apparatus 100 generates a control command according to the predetermined signal and then, performs an operation such as channel change or volume control according to the control command.

The remote control apparatus 200 controls an operation of the display apparatus 100. According to an exemplary embodiment, the remote control apparatus 100 may be a remote controller which may control an operation of the display apparatus 100 by radiating an infrared ray of a predetermined frequency on the display apparatus according to a user manipulation. In this case, the display apparatus 100 may receive the radiated infrared ray, convert the same to an electric signal corresponding to the frequency of the infrared ray, and transmit the signal to a processor such as to perform various operations such as channel change or volume control of the display apparatus 100.

In addition, any remote control means capable of controlling the display apparatus 100 at a certain distance may be realized as the remote control apparatus 200.

Further, the remote control apparatus 200 may be an exclusive apparatus which has a remote control function only, but may also be realized as a personal device such as mobile phone, Personal Digital Assistants (PDA), Digital Multimedia Broadcasting (DMB) terminal, etc. with a remote control function according to an exemplary embodiment.

Meanwhile, a user may request the display apparatus 100 to provide a content using the remote control apparatus 200, and control the display apparatus 100 which provides a content. For example, a user may select a channel using the remote control apparatus 200, and the display apparatus 100 may display a content of the selected channel using the remote control apparatus 200.

The remote control apparatus 200 may be connected to a wireless Internet through an Access Point (AP) 10 to receive content information regarding each channel displayed on the display apparatus from an external server and provide the content information regarding each channel to a user.

To do so, the remote control apparatus 200 may provide UI for receiving a user input so that a user can easily make use of the information of a desired content. Accordingly, the remote control apparatus 200 may include a display which provides UI.

Thus, a user may be provided with content information regarding each channel, which is received from an external server, and as the user may select a channel which he or she wishes to watch on the display apparatus 100 by selecting one of contents displayed on the UI.

In addition, the remote control apparatus 200 may select a channel or control volume which is to be output when the display apparatus 100 is turned on in advance even if the display apparatus 100 is turned off. While the display apparatus 100 is turned off, the remote control apparatus 200 may transmit a predetermined signal according to channel selection or volume control to the display apparatus 100. Upon receiving the predetermined signal, the display apparatus 100 may control operations of a display and a speaker according to the information regarding the channel selection or volume control included in the predetermined signal when the display apparatus 100 is turned on.

For example, if channel 11 where "2014 youth soccer final match" is broadcast is selected, and volume level is adjusted to '4' and then, enter button is pressed using the remote control apparatus 200 while the display apparatus 100 is turned off, channel 11 is selected and broadcast and volume level is adjusted to '4' automatically when the display apparatus 100 is turned on.

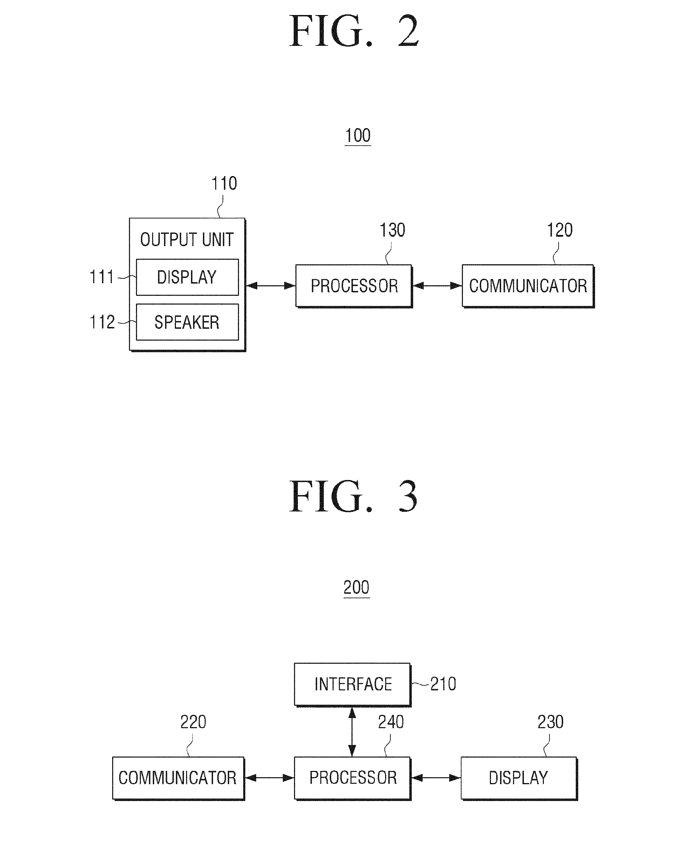

The detailed operations of the display apparatus 100 and the remote control apparatus 200 will be described with reference to FIGS. 2 and 3.

FIG. 2 is a block diagram illustrating configuration of a display apparatus briefly according to an exemplary embodiment.

Referring to FIG. 2, the display apparatus 100 according to an exemplary embodiment includes an output unit 110, a communicator 120, and a processor 130.

The output unit 110 includes a display 11 which outputs an image and a speaker 112 which outputs sound. The display 111 may be realized as Liquid Crystal Display Panel (LCD), Organic Light Emitting Diodes (OLED), etc., but is not limited thereto. In addition, the display 111 may include a driving circuit, a backlight unit, etc. which can be configured in the form of a-si TFT, LTPS(low temperature poly silicon) TFT, OTFT(organic TFT), etc.

The speaker 112 outputs sound regarding a content which is provided through the display 111. In addition, the speaker 112 may output various alarm sounds or voice messages. A user may control the volume of the speaker 112 through the remote control apparatus 200. Specifically, the speaker 112 may adjust a sound level using volume control information included in the predetermined signal received from the remote control apparatus 200. The speaker 112 may be included in the display apparatus 100, or may be a separate element connected to the display apparatus 100.

The communicator 120 performs communication with the remote control apparatus 200. In particular, the communicator 120 may be supplied with power constantly even when the display apparatus 100 is turned off and perform communication with the remote control apparatus 200 to exchange various information.

Specifically, the communicator 120 may perform communication with the remote control apparatus 200 according to a near-field wireless communication such as an RF communication including Bluetooth, Zigbee, Wi-Fi, etc. and IR communication. To do so, the communicator 120 may include a communication module which can be used in each communication method.

For example, if communication is performed according to a Bluetooth communication method, the communicator 120 may be paired with the remote control apparatus 200 using a Bluetooth communication module to be able to communicate with the display apparatus 100. If a Zigbee communication module is included, the communicator 120 may be paired with the remote control apparatus 200 using the Zigbee communication module to be able to communicate with the remote control apparatus 200. In addition, the communicator 120 may perform wireless communication with the remote control apparatus 200 using Wi-Fi, etc. For example, the communicator 120 may directly connected to the remote control apparatus 200 to perform communication using a Wi-Fi communication module without going through a network, or may be connected to a network using the AP 10 and perform communication with the remote control apparatus 200. As such, the communicator 120 may perform communication with the remote control apparatus 200 using various communication methods.

The display apparatus 100 according to an exemplary embodiment may receive a predetermined signal including channel selection information and volume control information from the remote control apparatus 200 through the communicator 120 when the display apparatus 100 is turned off. Here, the channel selection information may be a signal to change a channel displayed on the display apparatus 100 to a channel selected by a user by manipulating the remote control apparatus 200. The volume control information may be a signal to change a sound level output from the display apparatus to a volume adjusted by a user by manipulating the remote control apparatus 200.

In addition, the predetermined signal may further include an external input mode selected by a user and information regarding an application program which is executable program in the display apparatus 100 and executed by a user. Here, the application program may include various application programs such as Internet, camera mode, recording mode, SNS, etc.

The predetermined signal is a signal according to an RF method using a directional antenna, and may be received through an RF communication module provided on the communicator 120. Due to the strong straightforwardness of an IR-type signal or a laser signal, the remote control apparatus 200 should be manipulated in a straight line with the display apparatus 100. However, if a user performs a control operation such as channel selection or volume control in advance through the remote control apparatus 200 when the display apparatus 100 is turned off, it is not necessary to manipulate the display apparatus 100 and the remote control apparatus in a straight line.

Accordingly, with respect to a signal for simply turning on the display apparatus 100 or a signal regarding a control operation during a turn-on state, a general IR communication module can be used, and with respect to a signal regarding a control operation of setting a channel or volume in advance when the display apparatus 100 is turned off, an RF communication module using a directional antenna can be used. In other words, when the display apparatus 100 is turned off, it is not necessary to transmit a control operation signal while avoiding an obstacle in between and thus, a user may perform a manipulation to control the display apparatus 100 in advance conveniently. However, this is only an example, and the predetermined signal may be realized as a various types of signal using an IR method, etc.

Upon receiving a predetermined signal from the remote control apparatus 200, the communicator 120 transmits the received predetermined signal to the processor 130.

The processor 130 controls the overall operations of the display apparatus 100.

In particular, the processor 130 is turned on according to the predetermined signal which is received through the communicator 120, and controls an operation of an output unit based on channel selection information and volume control information, etc. which is included in the predetermined signal. Here, the predetermined signal may include a signal for turning on the power of the display apparatus 100, or a control operation signal regarding channel selection information, volume control information, etc. may cause the power of the display apparatus 100 to be turned on.

When the processor 130 is turned on, the display 11 may be controlled to select a channel corresponding to the channel selection information included in the predetermined signal and display a content of the selected channel. In addition, the speaker 112 may be controlled according to the volume control information included in the predetermined signal, and the sound of the content of the selected channel may be adjusted accordingly. Thus, a user may turn on the display apparatus 100 such that the corresponding content can be watched immediately according to the channel and volume which were selected before the display apparatus 100 is turned on.

In addition, the processor 130 may be turned on according to a wake signal received from the remote control apparatus 200 in the state where the display apparatus 100 is turned off, activate the display apparatus 100 excluding the output unit 110, and activate the output unit 110 when a predetermined signal is received. Here, the wake signal may be a signal to turn on the remaining elements of the display apparatus 100 excluding the output unit 110 in order to perform booting. In addition, the activation may indicate a state where power enough to perform an operation smoothly based on a user command is supplied and booting is performed. The operation of performing an operation smoothly may refer to an operation of receiving a control command corresponding to a user command from the remote control apparatus 200 and transmitting the corresponding response information.

Specifically, when a predetermined event occurs in the remote control apparatus 200, the processor 130 may receive a corresponding wake signal through the communicator 120 to be turned on and thus, the display apparatus 100 excluding the output unit no may be activated in advance. Subsequently, if a control operation signal regarding channel change or volume control according to a user manipulation is received, the processor 130 finally activates the output unit 110 and thus, may reduce power consumed through the output unit 110. In addition, while a user selects a channel or controls volume through the remote control apparatus 200, the elements of the display apparatus excluding the output unit 110 may be activated in advance and thus, the time for a user to wait for the display apparatus 100 to be turned on and display a content can be saved.

In addition, if a signal for turning off the display apparatus 100 is received, the processor 130 may control to transmit at least one of channel information and volume information of a content which is output through the output unit 110 at the time when the signal is received, to the remote control apparatus 200.

In other words, the processor 130 may transmit to the remote control apparatus 200 information regarding the channel and volume of a content which is displayed right before the display apparatus 100 is turned off so that the remote control apparatus 200 can remember this information. Accordingly, a user may check the information regarding the channel and volume right before the display apparatus 100 is turned off in advance through the remote control apparatus 200 and thus, may determine how to manipulate the channel and volume.

FIG. 3 is a block diagram illustrating configuration of a remote control apparatus briefly according to an exemplary embodiment.

Referring to FIG. 3, the remote control apparatus 200 according to an exemplary embodiment includes an interface 210, a communicator 220, a display 230, and a processor 240.

The interface 210 receives a user command. The user interface 210 may be realized as a touch pad, a key pad including various function keys, number keys, special keys, character keys, etc., or a touch screen. If the interface 210 is realized in the form of a touch screen, the interface 210 may include the display 230, and receive a user command as a user touches a point on a UI screen which is displayed through the display 230 using a finger or a stylus pen.

A user may perform various control operations such as channel selection, volume control, external input mode selection, application program execution of the display apparatus 100 using the interface 210. In addition, the interface 210 may further include a selection key, and the remote control apparatus 200 can determine which control operation is selected by a user through the selection key. If the interface 210 is realized as a touch screen, the remote control apparatus 200 may determine which one of a plurality of control operations is selected according to a user's touch input on the display 230.

The communicator 220 performs communication with an external server and the display apparatus 100. In particular, the communicator 220 may maintain communication and exchange various information with the display apparatus even when the display apparatus 100 is turned off. Specifically, the communicator 220 may perform communication with the display apparatus 100 according to a near-field communication method such as RF communication including Bluetooth, Zigbee, Wi-Fi, etc. and IR communication. To do so, the communicator 220 may include a communication module which can be used in each communication method.

The remote control apparatus 200 includes a communication module to perform communication in the same way as the communicator 120 of the display apparatus 100, and the communicator 220 of the remote control apparatus 200 according to an exemplary embodiment may include both an IR communication module and an RF communication module.

The specific method for the remote control apparatus 200 to perform communication with the display apparatus has been described above with reference to FIG. 2, so further description will not be provided.

The communicator 220 may be connected to Internet through the AP 10 and receive information regarding various TV contents from an external server in real time. For example, the communicator 220 may receive information regarding a content in the form of Electronic Program Guide (EPG) from an external server. There is no limit to the type of contents received through the AP, and the contents may include various services that can be provided by the display apparatus 100, such as music, movie, photo, game, SNS, news, heath education, etc. Meanwhile, the communicator 220 may receive information regarding a TV content directly from the display apparatus 100.

The display 230 displays a UI screen which provides information regarding a content received from an external server in real time.

The display 230 is provided on one area of the remote control apparatus, and may be realized as, for example, LCD or OLED, but is not limited thereto. The display 230 may display information regarding a content of each channel, such as a TV program which is broadcast in real time.

Meanwhile, the AP may transmit information regarding a content to the remote control apparatus 200 when a user requests information regarding the content. In another exemplary embodiment, the AP may transmit information regarding a content to the remote control apparatus 200 periodically.

The information regarding a content displayed on the UI screen of the display 230 may include an image, a text, etc. representing the substance of the content, and the content information includes information regarding a plurality of contents for each channel. If there are a number of contents to be displayed, the display 230 may display a UI which divides and provides the contents. The display 230 may display a UI which allows a user to navigate information regarding a plurality of contents through a user manipulation. Alternatively, the display 230 may display a UI which provides content information of each channel in the form of a thumbnail. The UI may further display information regarding the start time, closing time, play time, broadcast schedule, etc. of contents in each channel.

In addition, the UI screen provided by the display 230 may display information regarding volume. When a user manipulates a volume key on the remote control apparatus 200, information regarding the manipulated volume may be displayed on the UI screen. If the display 230 is realized as a touch screen, the volume may be controlled according to a touch input. In this case, if a user controls the volume, an alarm sound corresponding to the controlled volume may be output so that the user may estimate the volume level. Alternatively, the screen where volume is controlled using an OSD menu rather than a UI may be displayed.

In addition, the display 230 may provide a UI for setting various control operations of the display apparatus 100 in advance, such as the operations of selecting an external input mode, executing various application programs, etc.

The processor 240 controls the overall operations of the remote control apparatus 200.

In particular, the processor 240 transmit to the display apparatus 100 a predetermined signal which includes at least one of channel selection information and volume control information according to a user command input on the UI Screen and turns on the display apparatus 100. Here, the predetermined signal may include a signal to control to turn on the power of the display apparatus 100, or a control operation signal regarding channel selection information or volume control information may be configured to turn on the power of the display apparatus 100.

Accordingly, a user may turn on the display apparatus 100 such that the corresponding content can be watched immediately according to the channel and volume which were selected before the display apparatus 100 is turned on.

In addition, if a predetermined event occurs, the processor 240 may transmit a wake signal to the display apparatus 100 to activate the display apparatus 100 excluding the output unit 110, and transmit a predetermined signal to the display apparatus 100 to activate the output unit 110 and turn on the display apparatus 100.

Here, the predetermined event may be set as a specific movement of the remote control apparatus 200 which is detected as a specific key on the interface 230 of the remote control apparatus 200 is pressed or by using a gyro sensor, etc. In addition, if the display 230 is realized as a touch screen, the predetermined event may be set as a specific touch operation, etc.

If a predetermined event occurs in the remote control apparatus 200, the processor 240 may transmit a wake signal to the display apparatus 100 through the communicator 220 to activate the display apparatus excluding the output unit 110 in advance. Subsequently, if a control operation such as channel selection or volume control is performed by a user, the processor 240 may transmit a predetermined signal including information regarding the control operation to the display apparatus 100 to activate the output unit 110.

As a wake signal may be transmitted to the display apparatus 100 to activate the elements of the display apparatus 100 excluding the output unit 110 in advance before a user selects a channel or control volume through the remote control apparatus 200, the time to wait for the display apparatus 100 to be turned on and a content of the channel and volume selected by the user to be displayed can be saved.

In addition, the remote control apparatus 200 may further include a storage (not illustrated) which stores the channel and volume information received from the display apparatus 100 as the display apparatus 100 is turned off and in this case, the processor 240 may control to display a UI screen based on the information stored in the storage (not illustrated).

In other words, if the display apparatus 100 is turned off, the remote control apparatus 200 may receive information regarding the channel and volume which was displayed on the display apparatus 100 before the display apparatus 100 is turned off, and store the information in a storage (not illustrated). Accordingly, a user may check the information regarding the channel and volume right before the display apparatus 100 is turned off in advance through the remote control apparatus 200 and thus, may determine how to manipulate the channel and volume.

In addition, the processor 240 may control to include various control operations such as external input mode selection information, application program selection information, etc. according to a user command in a predetermined signal and transmit the predetermined signal.

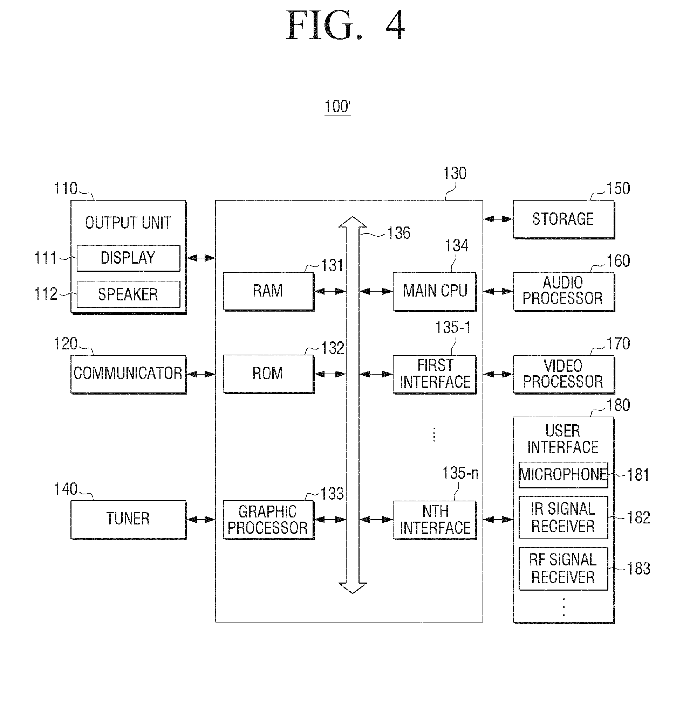

FIG. 4 is a block diagram illustrating configuration of a display apparatus in detail according to another exemplary embodiment. As illustrated in FIG. 4, the display apparatus 100 according to an exemplary embodiment includes the output unit 110, the communicator 120, the processor 130, a tuner 140, a storage 150, an audio processor 160, a video processor 170, and a user interface 180. Hereinafter, the elements which are overlapped with those in FIG. 2 will not be further described below.

The processor 130 controls the overall operations of the display apparatus 100 using various programs stored in the storage 150.

As illustrated in FIG. 4, the processor 130 includes a RAM 131, a ROM 132, a graphic processor 133, a main CPU 134, first to nth interface 135-1~135-n, and a bus 136. In this case, the RAM 131, the ROM 132, the graphic processor 133, the main CPU 134, the first to the nth interface 135-1~135-n, etc. may be interconnected through the bus 136.

The ROM 132 stores a set of commands for system booting. The main CPU 134 copies O/S stored in the storage 150 in the RAM 131 and executes the application programs copied in the RAM 131 to perform various operations. For example, the main CPU 134 may copy a signal processing module stored in the storage 150 in the RAM 131, and process a predetermined signal received from the remote control apparatus 200 by executing the signal processing module copied in the RAM 131. The signal processing module may the predetermined signal, and generate a turn-on signal to turn on the display apparatus 100. In this case, the main CPU 134 may analyze and process channel selection and volume control information included in the predetermined signal by using the signal processing module and generate a control signal to display a content according to the corresponding channel and volume.

The graphic processor 133 generates a screen including various objects such as an icon, an image, a text, etc. using an computing unit (not shown) and a rendering unit (not shown). The computing unit computes property values such as coordinates, shape, size, and color of each object to be displayed according to the layout of the screen using a control command received from an input unit. The rendering unit generates a screen with various layouts including objects based on the property values computed by the computing unit.

The main CPU 134 accesses the storage 150, and performs booting using an Operating System (O/S) stored in the storage 150. In addition, the main CPU 134 performs various operations using various programs, contents, data, etc. stored in the storage 150.

The first to the nth interface (135-1 to 135-n) are connected to the above-described various elements. One of the interface may be network interface which is connected to an external apparatus via network.

The tuner 140 selects and receives a broadcast signal of a predetermined channel from among broadcast signals that a display apparatus receives.

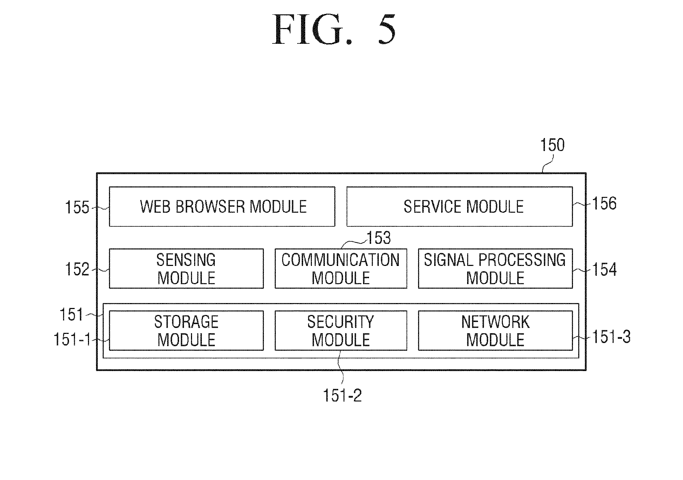

The storage 150 stores various modules to drive the display apparatus 100. In particular, the configuration of the storage 150 will be described in detail with reference to FIG. 5.

The audio processor 160 performs processing with respect to audio data. The audio processor 160 may perform various processing such as decoding, amplification, noise filtering, etc. with respect to audio data. Meanwhile, the audio processor 160 may include a plurality of audio processing modules to process audio corresponding to a plurality of contents.

The video processor 170 performs processing with respect to various broadcast contents received through the tuner 140. The video processor 170 may perform various image processing such as decoding, scaling, noise filtering, frame rate conversion, resolution conversion, etc. with respect to contents. Meanwhile, the video processor 170 may include a plurality of video processing modules to process video corresponding to a plurality of contents.

The user interface 180 detects a user interaction to control the overall operations of the display apparatus 100. In particular, as illustrated in FIG. 4, the user interface 180 may include various interaction detecting apparatuses such as a microphone 181, an IR signal receiver 182, an RF signal receiver 183, etc.

Through the IR signal receiver 182, a signal to turn on the display apparatus 100 may be received, and various control signals may be received from the remote control apparatus 200 while the display apparatus 100 is turned on. Meanwhile, through the RF signal receiver 183, a predetermined signal including information regarding channel selection and volume control of the display apparatus 100 may be received from the remote control apparatus 200 while the display apparatus 100 is turned off.

FIG. 5 is a block diagram illustrating configuration of a storage in detail according to an exemplary embodiment.

Referring to FIG. 5, the storage 150 may store software including a base module 151, a sensing module 152, a communication module 153, a signal processing module 154, a web browser module 155, and a service module 156.

The base module 151 refers to a basic module which processes a signal transmitted from each hardware included in the display apparatus 100, and transmits the processed signal to an upper layer module. The base module 151 includes a storage module 151-1, a security module 151-2 and a network module 151-3. The storage module 151-1 is a program module to manage database (DB) or registry. The security module 151-2 is a program module which supports certification, permission, secure storage, etc. of hardware, and the network module 151-3 is a module to support network connection and may include a DNET module, a UPnP module, etc.

The sensing module 152 is a module which collects information from various sensors, and analyzes and manages the collected information.

The communication module 153 performs communication with outside. The communication module 153 may include an IR communication module and an RF communication module, and may further include a messaging module and a telephone module.

The signal processing module 154 processes various signals which are received from the remote control apparatus 200. The signal processing module 154 may process a predetermined signal received from the remote control apparatus 200 to generate a turn-on signal to turn on the display apparatus 100 and process information regarding channel selection and volume control included in the predetermined signal to generate a control signal to change the channel and volume.

The signal processing module 154 may process a wake signal which is received from the remote control apparatus 200 to generate a signal to activate the display apparatus 100 excluding the output unit 110. In addition, the signal processing module 164 may process a predetermined signal which is received from the remote control apparatus 200 to generate a signal to activate the output unit 110.

Further, the signal processing module 154 processes information regarding the channel and volume when the display apparatus 100 is turned off so that a processed signal is transmitted to and stored in the remote control apparatus 200.

The web browser module 155 performs web browsing and access a web server. The web browser module 155 may include various modules such as a web view module constituting a web page, a download agent module performing downloading, a bookmark module, a webkit module, etc.

The service module 156 includes various applications to provide various services. Specifically, the service module 156 may include various program modules such as SNS program, content play program, game program, electronic book program, calendar program, alarm management program, other widgets, etc.

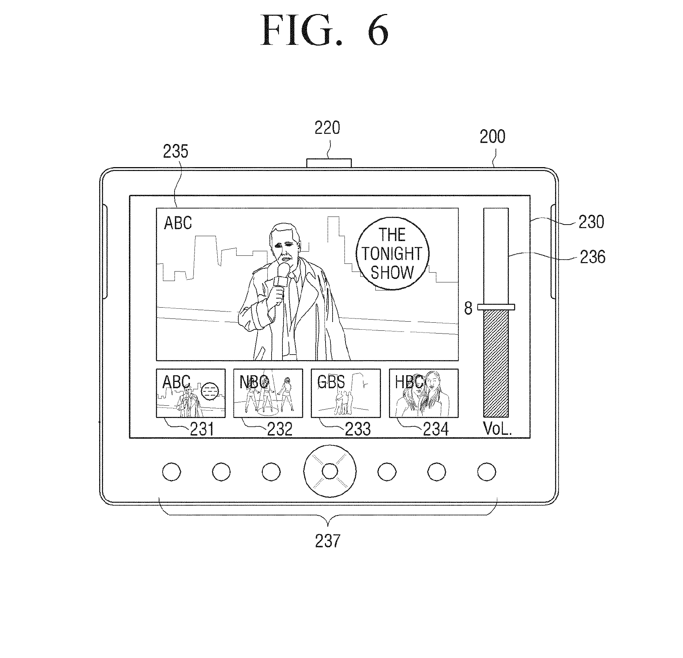

FIG. 6 is a view to explain a UI screen provided by a remote control apparatus according to an exemplary embodiment.

As illustrated in FIG. 6, the remote control apparatus 200 may display a UI screen which provides information regarding a content received from an external server in real time. The display 230 of the remote control apparatus 200 may display information regarding a TV content which is broadcast for each channel in real time.

Specifically, the list of TV contents which are broadcast in each broadcast channel (ABC, NBC, GBS, and HBC) may be displayed below the display 230 in the form of a thumbnail 231~234. If a user selects ABC broadcast channel in advance, information regarding the ABC broadcast channel selected by the user may be displayed on the biggest screen 235. If a channel is selected in advance, the volume of the display apparatus 100 may be set in advance using a volume control UI 235 provided on one side of the screen.

In addition, if the display 230 is realized as a touch screen, it is possible to select a channel or control volume with a touch operation on the UI screen, but it is also possible to realize a key pad 237 including various function keys, number keys, special keys, character keys, etc. on one side of the remote control apparatus 200 so that the remote control apparatus 200 can be controlled on the key pad 237.

Meanwhile, the configuration of the UI screen is not limited to the above, and may be realized in various forms which may provide channel navigation, volume control, etc. in advance. In addition, the UI screen may be configured to provide volume control only.

The predetermined signal including information regarding selected channel and controlled volume on the UI screen may be transmitted to the display apparatus 100 through the communicator 220.

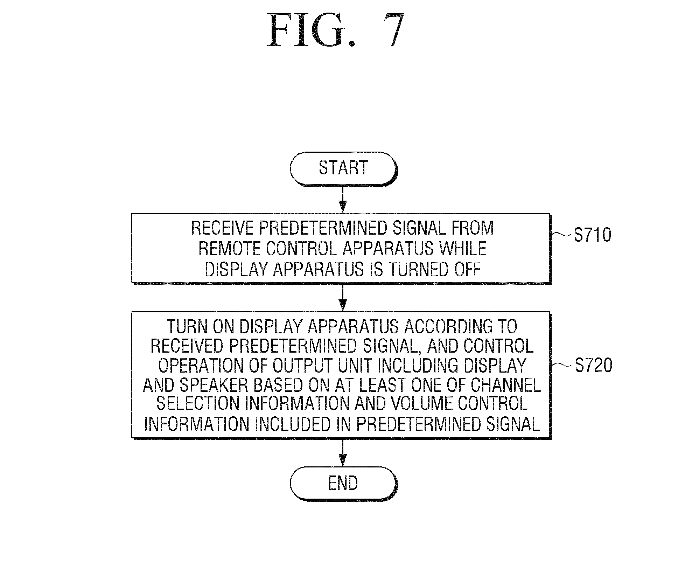

FIG. 7 is a flowchart to explain a controlling method of a display apparatus according to an exemplary embodiment.

First of all, a predetermined signal is received from the remote control apparatus 200 in a state where the display apparatus 100 is turned off (S710). In this case, the predetermined signal includes at least one of channel selection information and volume control information, and may further include information regarding at least one of an external input mode and an application program which are selected by a user on the remote control apparatus 200. Here, the predetermined signal may be a signal according to an RF method.

Subsequently, the display apparatus 100 is turned on according to the received predetermined signal, and the operation of the output unit 110 including the display 111 and the speaker 112 is controlled based on at least one of the channel selection information and the volume control information included in the predetermined signal (S720). In this case, the display apparatus 100 excluding the output unit 110 may be activated according to a wake signal received from the remote control apparatus 200 while the display apparatus 100 is turned off, and when the predetermined signal is received, the output unit 110 may be activated to turn on the display apparatus 100.

Here, if a signal to turn off the display apparatus 100 is received, at least one of channel information and volume information of a content which is output through the output unit 110 at the time when the signal is received may be transmitted to the remote control apparatus 200.

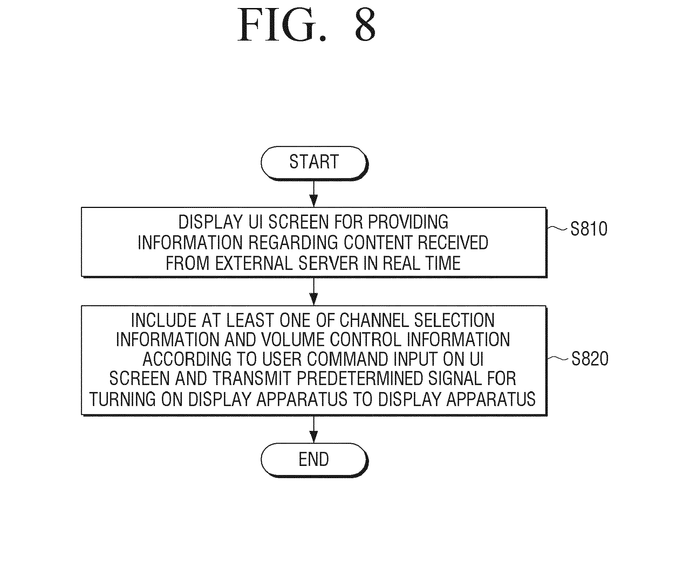

FIG. 8 is a flowchart to explain a controlling method of a remote control apparatus according to an exemplary embodiment.

First of all, a UI screen for providing information regarding a content which is received from an external server in real time is displayed (S810).

Subsequently, a predetermined signal which includes at least one of channel selection information and volume control information according to a user command input on the UI screen and turns on the display apparatus 100 is transmitted to the display apparatus 100 (S820). In this case, if a predetermined event occurs, a wake signal is transmitted to the display apparatus 100 to activate the display apparatus 100 excluding the output unit 110, and the predetermined signal may be transmitted to the display apparatus 100 to activate the output unit and turn on the display apparatus 100. Here, as the display apparatus 100 is turned off, the remote control apparatus 200 may receive and store information on the channel and volume right before the display apparatus 100 is turned off, and display a UI screen based on the stored information.

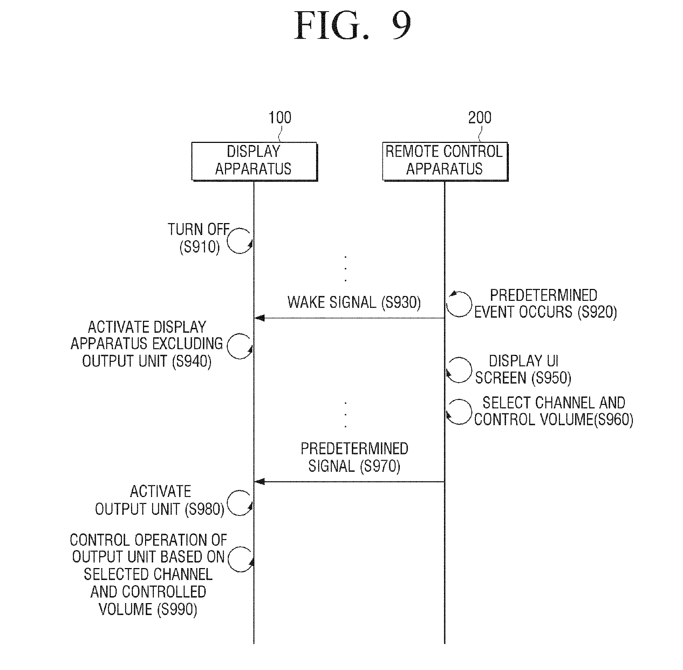

FIG. 9 is a view to explain a controlling process of a remote control system according to another exemplary embodiment.

In a state where the display apparatus 100 is turned off (S910), a user may cause a predetermined event which is set in the remote control apparatus 200 (S920) and transmit a wake signal to the display apparatus 100 (S930). Here, the predetermined event may be set as a specific movement of the remote control apparatus 200 which is detected as a specific key on the interface 230 of the remote control apparatus 200 is pressed or by using a gyro sensor, etc. In addition, if the display 230 is realized as a touch screen, the predetermined event may be set as a specific touch operation, etc.

Once the display apparatus 100 receives a wake signal, the display apparatus 100 may activate the remaining elements excluding the output unit 110 (S940). In other words, power is supplied and boot the remaining elements excluding the output unit 110, such as a processor. The remote control apparatus 200 where a predetermined event occurs may display a UI screen through the display 230 (S950). A user may obtain information regarding a broadcast content of each channel through the UI screen and accordingly, channel selection, volume control, etc. can be performed in advance before the display apparatus 100 is turned on (S960).

If a control operation such as channel selection, volume control, etc. is performed, the remote control apparatus 200 transmits a predetermined signal including information regarding such a control operation to the display apparatus 100 (S970). Once the display apparatus 100 receives the predetermined signal, the output unit, that is, the display 111 and the speaker 112 may be turned on and activated (S980). In this case, the display apparatus 100 may control an operation of the output unit 110 to display a content according to the selected channel and controlled volume by a user using the channel selection information and volume control information included in the predetermined signal (S990).

As such, according to the various exemplary embodiments, as a user selects a channel and volume in advance before turning on a display apparatus, power consumption may be reduced and user convenience can be improved.

The controlling method of a display apparatus according to the above-described various exemplary embodiments may be realized as a program and stored in various recording media. In other words, a computer program which is processed by various processors to execute the above-described various control methods may be stored and used in a recording medium.

For example, a non-transitory computer readable medium storing the steps of receiving a predetermined signal from a remote control apparatus while a display apparatus is turned off, turning on the display apparatus according to the received predetermined signal and controlling an operation of an output unit including a display and a speaker based on at least one of channel selection information and volume control information included in the predetermined signal may be provided.

The non-transitory recordable medium refers to a medium which may store data semi-permanently rather than storing data for a short time, such as register, cache, memory, etc. and is readable by an apparatus. Specifically, the above-described various applications and programs may be stored and provided in a non-transitory recordable medium such as CD, DVD, hard disk, Blu-ray disk, USB, memory card, ROM, etc.

The foregoing embodiments and advantages are merely exemplary and are not to be construed as limiting the present invention. The present teaching can be readily applied to other types of apparatuses and processes. Also, the description of the exemplary embodiments of the present disclosure is intended to be illustrative, and not to limit the scope of the claims, and many alternatives, modifications, and variations will be apparent to those skilled in the art.

## Claims

1. A display apparatus which is controllable by a remote control apparatus, the display apparatus comprising:
an output unit including a display and a speaker;
a communicator configured to receive a signal from the remote control apparatus while the display apparatus is turned off; and
at least one processor configured to, after the display apparatus is turned on from being turned off, control at least one of the display and the speaker of the output unit based on at least one of channel selection information and volume control information included in the signal received from the remote control apparatus while the display apparatus is turned off.

2. The display apparatus as claimed in claim 1, wherein the signal is a Radio Frequency (RF) signal.

3. The display apparatus as claimed in claim 1 or claim 2, wherein
the communicator is configured to receive a wake signal from the remote control apparatus while the display apparatus is turned off, and
the at least one processor is configured to activate the display apparatus excluding the output unit, in response to the received wake signal and,
in response to the received signal that includes the at least one of channel selection information and volume control information, activate the output unit, to thereby turn on the display apparatus, and thereafter perform the control of the at least one of the display and the speaker of the output unit.

4. The display apparatus as claimed in any one of the preceding claims, wherein the at least one processor, in response to receiving a signal for turning off the display apparatus, controls to transmit, to the remote control apparatus, at least one of channel information and volume information of a content which is output through the output unit at a time when the signal for turning off the display apparatus is received.

5. The display apparatus as claimed in any one of the preceding claims, wherein the signal further includes information regarding at least one of an external input mode and an application program selected by the remote control apparatus.

6. A method of controlling a display apparatus, comprising:
receiving, by a communicator included in the display apparatus and which is configured to perform communication with a remote control apparatus while the display apparatus is turned off, a signal from the remote control apparatus while the display apparatus is turned off; and
after the display apparatus is turned on from being turned off, controlling, by at least one processor included in the display apparatus, at least one of a display and a speaker included in an output unit of the display apparatus, based on at least one of channel selection information and volume control information included in the signal received from the remote control apparatus while the display apparatus is turned off.

7. The method as claimed in claim 6, wherein the signal is a Radio Frequency (RF) signal.

8. The method as claimed in claim 6 or claim 7, further comprising, prior to the controlling:
activating, by the at least one processor, the display apparatus excluding the output unit according to a wake signal received from the remote control apparatus by the communicator while the display apparatus is turned off, and
in response to receiving the signal including the at least one of channel selection information and volume control information, activating the output unit by the at least one processor, to thereby turn on the display apparatus.

9. The method as claimed in any one of claims 6 to 8, further comprising:
in response to receiving a signal by the display apparatus for turning off the display apparatus, transmitting, to the remote control apparatus by the communicator, at least one of channel information and volume information of a content which is output through the output unit at a time when the signal for turning off the display apparatus is received.

10. The method as claimed in any one of claims 6 to 9, wherein the signal further includes information regarding at least one of an external input mode and an application program selected by the remote control apparatus.

11. A remote control apparatus comprising:
a user interface configured to receive a user command;
a communicator configured to perform communication with a display apparatus while the display apparatus is turned off;
a display configured to display a User Interface (UI) screen to provide information regarding a content received by the remote control apparatus from an external server in real time; and
at least one processor configured to transmit, to the display apparatus via the communicator while the display apparatus is turned off, a signal which includes at least one of channel selection information and volume control information according to a user command input via the UI screen, wherein the transmitted signal causes the display apparatus to turn on from being turned off and to thereafter control at least one of a display and a speaker of the display apparatus based on at least one of the channel selection information and the volume control information included in the transmitted signal.

12. The remote control apparatus as claimed in claim 11, wherein the signal is a Radio Frequency (RF) signal.

13. A controlling method of a remote control apparatus, comprising:
displaying, on the remote control apparatus, a UI screen to provide information regarding a content received from an external server in real time; and
transmitting, to a display apparatus which is capable of communicating with the remote control apparatus while the display apparatus is turned off, a signal while the display apparatus is turned off and which includes at least one of channel selection information and volume control information according to a user command input via the UI screen, wherein the transmitted signal causes the display apparatus to turn on from being turned off and to thereafter control at least one of a display and a speaker of the display apparatus based on the at least one of the channel selection information and the volume control information included in the transmitted signal.

14. A system comprising:
a remote control apparatus configured to display a UI screen to provide information regarding a content received by the remote control device from an external server in real time, and transmit a signal including at least one of channel selection information and volume control information according to a user command which is input via the UI screen; and
a display apparatus including a display and a speaker, the display apparatus configured to receive the signal transmitted by the remote control apparatus while the display apparatus is turned off and, after receiving the signal, to be turned on from being turned off, and to control at least one of the display and the speaker based on at least one of channel selection information and volume control information included in the received signal.

15. A display apparatus comprising:
an output unit including a display and a speaker;
a communicator configured to receive at least one signal from a remote control apparatus while the output unit is inactivated; and
at least one processor configured to, in response to the received at least one signal, activate the output unit and, after activating the output unit, to control at least one of the display and the speaker based on at least one of channel selection information and volume control information included in the received at least one signal.
